# EUROPEAN PATENT APPLICATION

(11) **EP 2 500 210 A2**
(43) Date of publication of application: **19.09.2012**
(21) Application number: 12159414.7
(22) Date of filing: 14.03.2012
(51) Int. Cl.: B60L 11/18

(54) **Apparatus and methods for providing demand response information**

(30) Priority: 17.03.2011 US 201113050591
(71) Applicant: General Electric Company, Schenectady, NY 12345 (US)
(72) Inventor: Boot, John Christopher, Atlanta, GA Georgia 30339-8402 (US)
(74) Representative: Picker, Madeline Margaret

(57) **Abstract**

A computing device (122) for use with an electric vehicle (110) is provided. The computing device (122) includes an interface that is configured to receive demand response data. Moreover, the computing device (122) includes a processor that is coupled to the interface and is programmed to generate a plurality of energy prices based on the demand response data. Each energy price is associated with a time range. The computing device (122) also includes a presentation interface coupled to the processor for use in presenting the plurality of energy prices to a user of the electric vehicle (110).

## Description

### BACKGROUND OF THE INVENTION

The field of the invention relates generally to electric vehicles and, more particularly, to a computing device that provides demand response information to a user, such as an owner and/or operator, of an electric vehicle.

In response to increasing fuel costs related to the use of conventional combustion engine vehicles and in response to heightened concerns about global warming, the use of electric vehicles has increased. As a result, energy demand will likely increase in the form of electrical energy used to charge batteries or other energy sources used in such vehicles. For example, the demand on the power grid is likely to increase while the demand for automotive fuel decreases. Such demands will likely cause an increase in the price of energy from the power grid. In particular, the price of energy is likely to increase during peak times of high demand. Moreover, the increased demand on the power grid may provide market demand for charging stations at conventional fueling stations, roadside rest areas, restaurants, parking garages, and other common parking areas.

Currently, at least some known utility companies use demand response (DR) to manage the consumption patterns and/or behaviors of energy by their customers in response to supply conditions. For example, some known utility companies may have customers reduce their consumption at critical times or in response to market prices. To reduce peak loads, at least some known utility companies may use smart grid applications that provide time-based pricing that enables customers to selectively adjust their usage to take advantage of fluctuating prices. Moreover, some known utility companies may provide information, regarding their fluctuating prices for example, to customers using various notification methods, such as e-mails and/or text messages. However, known management methods are not used to manage energy consumption by electric vehicles. More specifically, no current systems are used to provide demand response information to a user of an electric vehicle.

### BRIEF DESCRIPTION OF THE INVENTION

In one embodiment, a method for providing demand response information to a user of an electric vehicle is provided. The method includes receiving demand response data. A plurality of energy prices based on the demand response data is then generated by a processor, wherein each energy price is associated with a time range. The plurality of energy prices are then presented to a user of the electric vehicle.

In another embodiment, a computing device for use with an electric vehicle is provided. The computing device includes an interface that is configured to receive demand response data. Moreover, the computing device includes a processor that is coupled to the interface and is programmed to generate a plurality of energy prices based on the demand response data. Each energy price is associated with a time range. The computing device also includes a presentation interface coupled to the processor for use in presenting the plurality of energy prices to a user of the electric vehicle.

In another embodiment, an electric vehicle is provided. The electric vehicle includes a battery and a computing device coupled to the battery. The computing device includes an interface that is configured to receive demand response data. Moreover, the computing device includes a processor that is coupled to the interface and is programmed to generate a plurality of energy prices based on the demand response data. Each energy price is associated with a time range. The computing device also includes a presentation interface coupled to the processor for use in presenting the plurality of energy prices to a user of the electric vehicle.

### BRIEF DESCRIPTION OF THE DRAWINGS

Fig. 1 is a block diagram of an example system for use in providing demand response information to an electric vehicle;
Fig. 2 is a block diagram of an example computing device that may be used with the system shown in Fig. 1; and
Fig. 3 is a flow chart that illustrates an example method for use in providing demand response information using the computing device shown in Fig. 2.

### DETAILED DESCRIPTION OF EMBODIMENTS OF THE INVENTION

The example methods and apparatus described herein overcome at least some disadvantages of known systems that provide demand response information. More specifically, the embodiments described herein use a computing device to provide demand response information to a user, such as an operator and/or owner, of an electric vehicle. The computing device includes a communication interface that receives demand response data from a utility. A processor is coupled to the communication interface and is programmed to generate, for example. a plurality of energy prices and/or a plurality of costs to recharge an electric vehicle that are each associated with a time range, such as a date and/or time period, and/or associated with a geographic area. The energy prices and/or costs to recharge electric vehicle are based on the demand response data. A presentation interface presents the energy prices and/or costs for a given time range to a user of an electric vehicle. By providing an apparatus that enables demand response information to be communicated to a user of an electric vehicle, energy consumption by electric vehicles may be more effectively managed in response to demand and supply conditions.

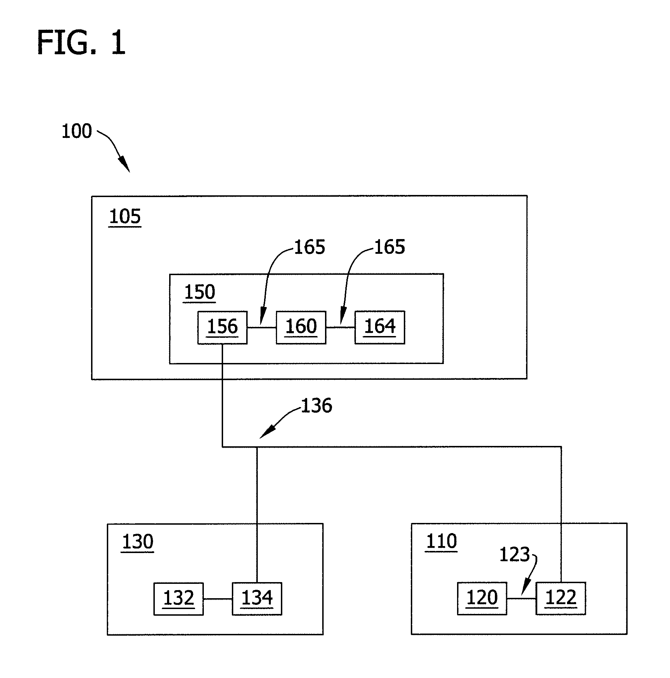

Fig. 1 is a block diagram of a system 100 for use in enabling a utility 105 to provide demand response information to a user, such as an operator and/or an owner, of at least one electric vehicle 110. It should be noted that, as used herein, the term "electric vehicle" refers generally to a vehicle that includes one or more electric motors that are used for propulsion for all or at least part of the time. Energy used to propel electric vehicles 110 may come from various sources, such as, but not limited to, an on-board rechargeable battery and/or an on-board fuel cell. In the example embodiment, electric vehicle 110 is a fuel-cell vehicle, which uses only electrical energy for propulsion. Alternatively, electric vehicle 110 is a hybrid electric vehicle, a fuel-cell vehicle, or any other vehicle to which electrical energy may be delivered via a power grid. At least some known hybrid electric vehicles capture and store energy generated by braking. Moreover, at least some known hybrid electric vehicles use energy stored in an electrical source, such as a battery, to continue operating when idling to conserve fuel. At least some known hybrid electric vehicles are capable of recharging the battery by plugging into a power receptacle, such as a general power outlet.

In the example embodiment, electric vehicle 110 includes a battery 120. In the example embodiment, battery 120 is a rechargeable lithium-ion battery 120. Alternatively, battery 120 may be any other lithium-based battery or any other type of battery that enables electric vehicle 110 to function as described herein. In the example embodiment, electric vehicle 110 also includes a computing device 122 that is coupled to battery 120 via a conduit 123. Alternatively, computing device 122 may be wirelessly coupled to battery 120. It should be noted that, as used herein, the term "couple" is not limited to a direct mechanical, electrical and/or communication connection between components, but may also include an indirect mechanical, electrical and/or communication connection between multiple components.

Moreover, in the example embodiment, conduit 123 is fabricated from a metallic wire. Alternatively, conduit 123 may be fabricated from any other substance or compound that enables conduit 123 and/or system 100 to function as described herein. In the example embodiment, computing device 122 enables utility 105 to communicate with electric vehicle 110. More specifically, computing device 122 enables utility 105 to communicate demand response information to electric vehicle 110.

Moreover, in the example embodiment, system 100 includes at least one electric vehicle charging station 130. In the example embodiment, electric vehicle 110 receives electrical energy supplied from electric vehicle charging station 130 and stores the electrical energy in battery 120. Electric vehicle 110 uses the stored electrical energy for propulsion, rather than, or in addition to, more conventional energy sources, such as gasoline. Charging station 130 also includes a computing device 132 that monitors at least one electric vehicle 110 using charging station 130 and monitors the various times that electric vehicle 110 uses charging station 130.

In the example embodiment, charging station 130 also includes a network interface 134 that couples to a network 136 to facilitate communication with utility 105. In the example embodiment, network 136 may include, but is not limited to only including, the Internet, a local area network (LAN), a wide area network (WAN), a wireless LAN (WLAN), a mesh network, and/or a virtual private network (VPN).

In the example embodiment, utility 105 includes a utility demand response system 150. Moreover, in the example embodiment, demand response system 150 includes a communication interface 156 that is coupled to charging station 130 and to electric vehicle 110 via network 136. More specifically, communication interface 156 is coupled to computing device 132 via network interface 134 and to computing device 122. In the example embodiment, utility 105 may communicate with charging station 130 and/or electric vehicle 110 using a wired network connection (e.g., Ethernet or an optical fiber), a wireless communication means, such as radio frequency (RF), e.g., FM radio and/or digital audio broadcasting, an Institute of Electrical and Electronics Engineers (IEEE®) 802.11 standard (e.g., 802.11(g) or 802.11(n)), the Worldwide Interoperability for Microwave Access (WIMAX®) standard, a cellular phone technology (e.g., the Global Standard for Mobile communication (GSM)), a satellite communication link, and/or any other suitable communication means. WIMAX is a registered trademark of WiMax Forum, of Beaverton, Oregon. IEEE is a registered trademark of the Institute of Electrical and Electronics Engineers, Inc., of New York, New York.

Communication interface 156 enables utility 105 to communicate with charging station 130 and/or electric vehicle 110. More specifically, in the example embodiment, communication interface 156 is configured to receive information from charging station 130. More specifically, in the example embodiment, communication interface 156 receives information related to the number of electric vehicles 110 using charging station 130 to receive energy, and to the various times that electric vehicles 110 use charging station 130 from computing device 132. Moreover, communication interface 156 transmits demand response data to electric vehicle 110 based on information received from charging station 130.

In the example embodiment, demand response system 150 executes programmed instructions. More specifically, in the example embodiment, demand response system 150 includes a processor 160 that is coupled to a memory device 164 and to communication interface 156 via a system bus 165. In some embodiments, executable instructions are stored in memory device 164. Demand response system 150 is programmable to perform one or more operations described herein by programming processor 160. For example, processor 160 may be programmed by encoding an operation as one or more executable instructions and providing the executable instructions in memory device 164. Processor 160 may include one or more processing units (e.g., in a multi-core configuration). More specifically, in the example embodiment, processor 160 is programmed to generate demand response data based on the information received from charging station 130.

As used herein, the term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above examples are example only, and thus are not intended to limit in any way the defmition and/or meaning of the term "processor."

Moreover, processor 160 may include, but is not limited to, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by processor 160, cause processor 160 to perform at least a portion of the methods described herein. The above examples are example only, and thus are not intended to limit in any way the definition and/or meaning of the term processor.

Memory device 164 enables information such as executable instructions and/or other data to be stored and retrieved. Memory device 164 may include one or more computer readable media, such as, without limitation, dynamic random access memory (DRAM), static random access memory (SRAM), a solid state disk, and/or a hard disk. Memory device 164 may be configured to store, without limitation, executable instructions, configuration data, geographic data (e.g., topography data and/or obstructions), utility network equipment data, and/or any other type of data.

In the example embodiment, memory device 164 stores information received from charging station 130 and stores demand response data that is generated by processor 160. Moreover, in the example embodiment, memory device 164 may include random access memory (RAM), which can include non-volatile RAM (NVRAM), magnetic RAM (MRAM), ferroelectric RAM (FeRAM) and other forms of memory. Memory device 164 may also include read only memory (ROM), flash memory and/or Electrically Erasable Programmable Read Only Memory (EEPROM). Any other suitable magnetic, optical and/or semiconductor memory, by itself or in combination with other forms of memory, may be included in memory device 164. Memory device 164 may also be, or include, a detachable or removable memory, including, but not limited to, a suitable cartridge, disk, CD ROM, DVD or USB memory. Alternatively, memory device 164 may be a database. The term "database" refers generally to any collection of data including hierarchical databases, relational databases, flat file databases, object-relational databases, object oriented databases, and any other structured collection of records or data that is stored in a computer system. The above examples are example only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

During operation, charging station 130 monitors the number of electric vehicles 110 using charging station 130 and the various times that electric vehicles 110 use charging station 130 via computing device 132. Charging station 130 transmits this information to utility 105. More specifically, computing device 132 transmits this information to communication interface 156. Communication interface 156 transmits the information to processor 160 and to memory device 164 wherein the information is stored. In addition, processor 160 generates demand response data based on the information received from charging station 130 and the demand response data is stored in memory device 164. The demand response data is transmitted to communication interface 156 prior to being selectively transmitted to electric vehicle 110. More specifically, communication interface 156 transmits the demand response information to computing device 123, wherein the demand response data is converted to a plurality of energy prices and/or recharging costs that correspond to a time range and/or a geographic area. Moreover, the plurality of energy prices and/or recharging costs are presented to a user of electric vehicle 110.

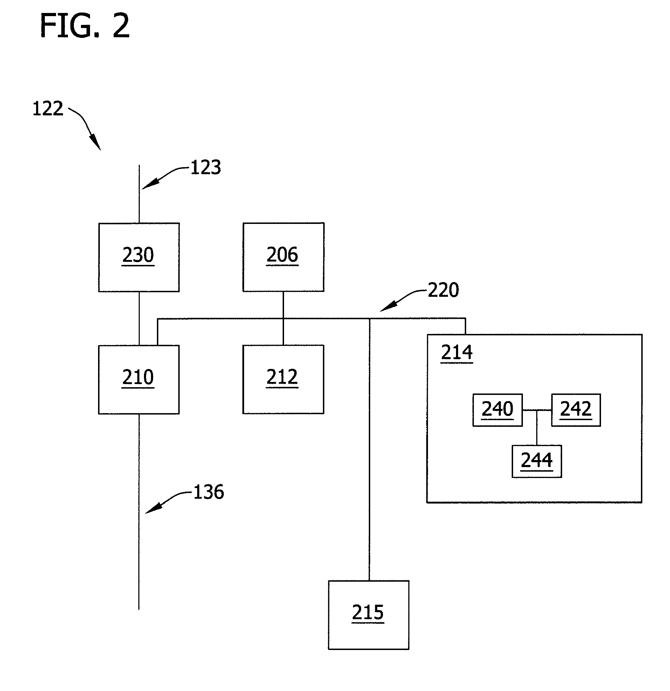

Fig. 2 is a block diagram of computing device 122. In the example embodiment, computing device 122 includes a processor 206 that is coupled to a communication interface 210, to a memory device 212, to a presentation interface 214, and to a user interface 215 via a system bus 220.

In the example embodiment, computing device communication interface 210 is coupled to utility communication interface 156 (shown in Fig. 1) via network 136. Communication interface 210 receives the demand response data from utility 105 (shown in Fig. 1). Moreover, in the example embodiment communication interface 210 is coupled to battery 120 (shown in Fig. 1) via a vehicle communication module 230. Vehicle communication module 230 enables communication interface 210 to receive information regarding battery 120. More specifically, module 230 enables communication interface 210 to receive battery data from battery 120. In the example embodiment, battery data includes a current charge status. Alternatively, battery data may include any additional information regarding battery 120.

Moreover, in the example embodiment, processor 206 is coupled to communication interface 210 to enable programmed instructions to be executed. In some embodiments, executable instructions are stored in memory device 212. In the example embodiment, computing device 122 is programmed to perform one or more operations described herein by programming processor 206. For example, processor 206 may be programmed by encoding an operation as one or more executable instructions and providing the executable instructions in memory device 212. Processor 206 may include one or more processing units (e.g., in a multi-core configuration).

Moreover, in the example embodiment, processor 206 is programmed to generate a plurality of energy prices and/or recharging costs based on the demand response data. In the example embodiment, each energy price and/or recharging cost corresponds to a time range, such as a period of time during a day and/or a day of the week. Each energy price and/or recharging cost may also correspond to a geographic area, such as a recharging cost for at least one charging station, such as charging station 130 (shown in Fig. 1), that is within a range and/or route of electric vehicle 110.

More specifically, in the example embodiment, processor 206 is programmed to calculate an energy price by calculating a price per unit of energy, such as a price per kilowatt hour. Moreover, in the example embodiment, processor is programmed to calculate a price to recharge electric vehicle 110 irrespective of use, such as a price per hour. In the example embodiment, processor 206 is programmed to calculate a plurality of recharging costs based on the demand response data and the battery data. Further, in the example embodiment, processor 206 is programmed to calculate a predicted charging duration based on the current charge status. Processor 206 is also programmed to calculate a plurality of recharging costs for at least one charging station, such as charging station 130, that is within a range and/or a route of electric vehicle 110. In the example embodiment, the recharging cost may include a recharging cost to charge electric vehicle 110 and/or a fixed price to recharge electric vehicle 110. Processor 206 is also programmed to generate an audio and/or visual signal based on the plurality of energy prices, such as the plurality of recharging costs.

Processor 206 may include, but is not limited to only including, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by processor 206, cause processor 206 to perform at least a portion of the methods described herein. The above examples are example only, and thus are not intended to limit in any way the definition and/or meaning of the term processor.

Memory device 212 stores information, such as executable instructions and/or other data that is stored and retrieved. Memory device 212 may include one or more computer readable media, such as, without limitation, dynamic random access memory (DRAM), static random access memory (SRAM), a solid state disk, and/or a hard disk.

Moreover, in the example embodiment, memory device 212 may include random access memory (RAM), which can include non-volatile RAM (NVRAM), magnetic RAM (MRAM), ferroelectric RAM (FeRAM) and other forms of memory. Memory device 212 may also include read only memory (ROM), flash memory and/or Electrically Erasable Programmable Read Only Memory (EEPROM). Any other suitable magnetic, optical and/or semiconductor memory, by itself or in combination with other forms of memory, may be included in memory device 212. Memory device 212 may also be, or include, a detachable or removable memory, including, but not limited to, a suitable cartridge, disk, CD ROM, DVD or USB memory. Alternatively, memory device 212 may be a database. The term "database" refers generally to any collection of data including hierarchical databases, relational databases, flat file databases, object-relational databases, object oriented databases, and any other structured collection of records or data that is stored in a computer system. The above examples are example only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

In the example embodiment, presentation interface 214 presents information, such as a user interface, application source code, input events, and/or validation results to a user of electric vehicle 110 (shown in Fig. 1). In the example embodiment, presentation interface 214 includes a display adapter 240 that is coupled to at least one display device 242. In the example embodiment, display device 242 includes a visual display, such as a cathode ray tube (CRT), a liquid crystal display (LCD), an organic LED (OLED) display, and/or an "electronic ink" display. Alternatively, display device 242 may be a navigation system and/or an onboard vehicle computer. Moreover, while display device 242 is coupled within presentation interface 214 and a component of computing device 122 in the example embodiment, it should be noted that display device 242 may be a separate component from computing device 122. For example, display device 242 may be a navigation system and/or an onboard vehicle computer that is coupled within electric vehicle 110 and coupled to computing device 122. Moreover, presentation interface 214 includes an audio output device 244. In the example embodiment, audio output device 244 is a data to simulated voice convertor that may include an audio adapter (not shown) and/or a speaker (not shown) such that the user is enabled to hear the demand response information. Alternatively, audio output device 244 may be any other type of device that enables computing device 122 and/or electric vehicle 110 to function as described herein.

In the example embodiment, user interface 215 receives any information suitable for use with the methods described herein. Moreover, in the example embodiment, user interface 215 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone). Alternatively, a single component, such as a touch screen, may function as both a display device of presentation interface 214 and user interface 215.

During operation, utility 105 transmits the demand response data based on the information received from charging station 130 to computing device 122. More specifically, utility transmits the demand response data to communication interface 210. Communication interface 210 transmits the demand response data to processor 206 and then to memory device 212 such that the demand response data may be stored.

In the example embodiment, processor 206 generates a plurality of energy prices and/or recharging costs based on the demand response data. In the example embodiment, each energy price and/or recharging cost corresponds to a time range, such as a period of time during a day and/or a day of the week. Each energy price and/or recharging cost may also correspond to a geographic area, such as a recharging cost for at least one charging station, such as charging station 130, that is within a range and/or route of electric vehicle 110. For example, processor 206 calculates each energy price by calculating a price per unit of energy, such as a price per kilowatt hour. The plurality of energy prices based on the demand response data received.

The plurality of energy prices are then transmitted to presentation interface 214. Presentation interface 214 presents the information based on the input the user provides to user interface 215. More specifically, the user can input whether the information is presented via a visual output and/or audio output. If the user chooses to receive the information via a visual output, processor 206 generates a visual signal such that the plurality of energy prices are transmitted to display device 242. The user can then visually identify the plurality of energy prices that correspond to a time range and using such information, the user may easily determine the optimal time of day and/or optimal time of the week to charge electric vehicle 110 in order to receive the cheapest price rates. If the user chooses to receive the information via an audio output, processor 206 generates an audio signal such that the plurality of energy prices are transmitted to audio output device 244. Audio output device 244 enables the user to hear the plurality of energy prices.

Moreover, in the example embodiment, processor 206 calculates a plurality of recharging costs that are based on the demand response data and the battery data that is received from electric vehicle 110. More specifically, communication interface 210 receives the battery data, such as a current charge status of battery 120 of electric vehicle 110, via vehicle communication module 230. The current charge status is transmitted to processor 206, wherein a predicted charging duration is based on the current charge status of battery 120. Moreover, in the example embodiment, processor calculates a price to recharge electric vehicle 110 irrespective of use, such as a price per hour. Further, in the example embodiment, processor 206 calculates a plurality of recharging costs for at least one charging station, such as charging station 130, that is within a range and/or a route of electric vehicle 110. In the example embodiment, the recharging cost may include a recharging cost to charge electric vehicle 110 and/or a fixed price to recharge electric vehicle 110.

Similar to the plurality of energy prices, the predicted charging duration and/or recharging costs are then transmitted to presentation interface 214. More specifically, the predicted charging duration and/or recharging costs are transmitted to display device 242 such that the user can visually identify the predicted charging duration and/or recharging costs. For example, the user is able to visually see the plurality of recharging costs for at least one charging station, such as charging station 130, that is within a range and/or a route of electric vehicle 110 via display device 242. Using such information, the user is able to identify when and where electric vehicle 110 should be recharged. For example, the user may identify which charging station 130 within a geographic area would provide the cheapest rate. The user may easily determine the optimal time of day and/or optimal time of the week to recharge electric vehicle 110 in order to receive the cheapest price rates. In addition to a visual display, processor 206 may also generate an audio signal based on the plurality of energy prices. Processor 206 transmits the audio signal to the user of the electric vehicle 110 via audio output device 244. The audio signal enables the user to hear the plurality of energy prices.

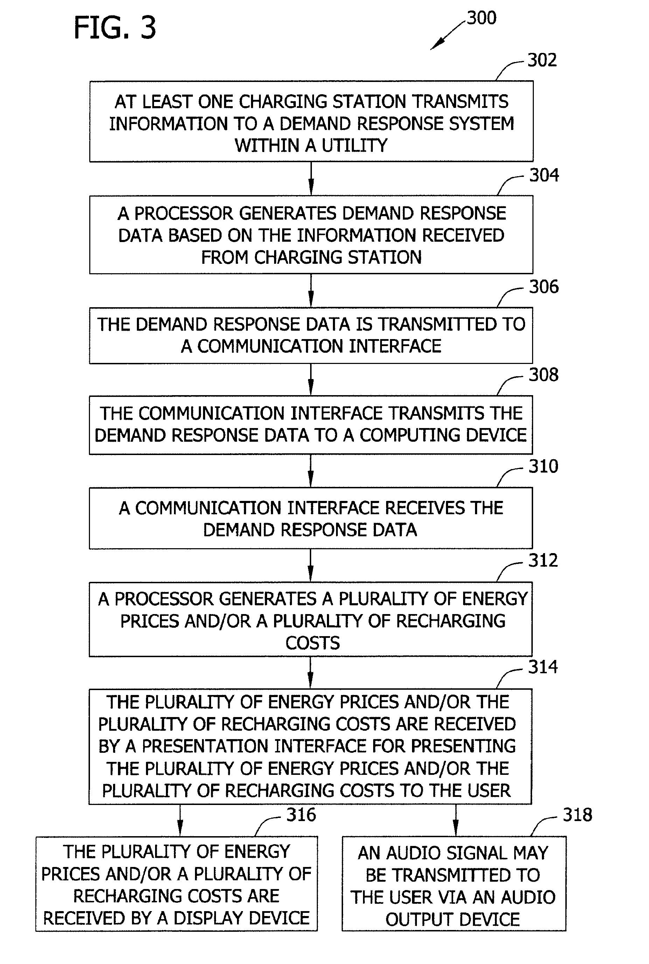

Fig. 3 is a flow chart that illustrates an example method 300 for providing demand response information to an electric vehicle, such as electric vehicle 110 (shown in Fig. 1). In the example embodiment, at least one charging station 130 (shown in Fig. 1) transmits 302 information related to the number of electric vehicles 110 that use charging station 130 and related to the various times that electric vehicles 110 use charging station 130 to a utility demand response system 150 (shown in Fig. 1) located within utility 105 (shown in Fig. 1). A processor 160 (shown in Fig. 1), included within utility demand response system 150, generates 304 demand response data based on information received from charging station 130. The demand response data is transmitted 306 to a communication interface 156 (shown in Fig. 1).

In the example embodiment, communication interface 156 transmits 308 the demand response data to a computing device 122 (shown in Figs. 1 and 2). More specifically, a communication interface 210 (shown in Fig. 2) receives 310 the demand response data. In the example embodiment, a processor 206 (shown in Fig. 2), coupled to communication interface 210, generates 312 a plurality of energy prices and/or a plurality of recharging costs based on the demand response data, wherein each energy price or recharging cost is associated with a specified time range and/or geographic area. The plurality of energy prices and/or recharging costs are then received 314 by a presentation interface 214 (shown in Fig. 2) coupled to processor 206 and are subsequently presented to the user of electric vehicle 110.

When the plurality of energy prices and/or recharging costs are received 314 by presentation interface 214, the plurality of energy prices and/or recharging costs are received 316 by a display device 242 (shown in Fig. 2) such that the user can visually identify the plurality of energy prices and/or recharging costs that correspond to a specified time range. Alternatively, an audio signal may be transmitted 318 to the user of the electric vehicle 110 via an audio output device 244 (shown in Fig. 2), enabling the user to hear the plurality of energy prices and/or recharging costs.

As compared to known systems and methods that are used by a utility to provide information to consumers, the above-described embodiments of methods and apparatus enable a utility to expand its applications used to manage energy consumption to electric vehicles. In addition to being able to provide demand response information to electric energy users in their homes and/or to their appliances, the embodiments described herein enable the utility to provide demand response information to a user of an electric vehicle. More specifically, the embodiments described herein use a computing device to provide demand response information to a user, such as an operator and/or owner, of an electric vehicle. The computing device includes a communication interface that receives demand response data from a utility. A processor is coupled to the communication interface and is programmed to generate, for example. a plurality of energy prices and/or a plurality of costs to recharge an electric vehicle that are each associated with a time range, such as a date and/or time period, and/or associated with a geographic area. The energy prices and/or costs to recharge electric vehicle are based on the demand response data. A presentation interface presents the energy prices and/or costs for a given time range to a user of an electric vehicle. By providing an apparatus that enables demand response information to be communicated to a user of an electric vehicle, energy consumption by electric vehicles may be more effectively managed in response to demand and supply conditions.

Example embodiments of an apparatus and a method for use in providing demand response information to a user of an electric vehicle are described above in detail. The apparatus and method are not limited to the specific embodiments described herein, but rather, components of the apparatus and/or steps of the method may be utilized independently and separately from other components and/or steps described herein. For example, the apparatus may also be used in combination with other systems and methods, and is not limited to practice with only the system as described herein. Rather, the example embodiment can be implemented and utilized in connection with many other applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A computing device (132) for use with an electric vehicle (110), said computing device comprising:
an interface (210) configured to receive demand response data;
a processor (206) coupled to said interface and programmed to generate a plurality of energy prices based on the demand response data, wherein each energy is associated with a time range; and
a presentation interface (214) coupled to said processor for use in presenting the plurality of energy prices to a user of the electric vehicle.

2. A computing device (132) in accordance with claim 1, wherein said processor (206) is programmed to calculate a plurality of recharging costs based on the demand response data and based on battery data received from the electric vehicle (110), wherein the battery (120) data includes a current charge status of the battery, said processor is further programmed to calculate a predicted charging duration based on the current charge status.

3. A computing device (132) in accordance with claim 1 or claim 2, wherein said processor (206) is programmed to calculate a plurality of recharging costs for at least one charging station (130) that is within at least one of a range and a route of the electric vehicle (110).

4. A computing device (132) in accordance with claim 3, wherein said presentation interface (214) is configured to present the predicted charging duration.

5. A computing device (132) in accordance with any preceding claim, wherein said presentation interface (214) comprises a display device (242).

6. A computing device (132) in accordance with claim 5, wherein said display device (242) includes at least one of a navigation system and an onboard vehicle computer.

7. A computing device (132) in accordance with any one of claims 1 to 4, wherein said presentation interface (214) comprises an audio output device (244).

8. A computing device (132) in accordance with Claim 7, wherein said processor (206) is programmed to generate an audio signal based on the plurality of energy prices, said audio output device (244) is configured to transmit the audio signal to the user of the electric vehicle (110).

9. An electric vehicle (110) comprising:
a battery (120);
a computing device (132) coupled to the battery, said computing device comprising:
an interface (210) configured to receive demand response data;
a processor (206) coupled to said interface and programmed to generate a plurality of energy prices based on the demand response data, wherein each energy price is associated with a time range; and
a presentation interface (214) coupled to said processor for use in presenting the plurality of energy prices to a user of the electric vehicle.

10. An electric vehicle (110) in accordance with Claim 9, wherein said processor (206) is programmed to calculate a plurality of recharging costs based on the demand response data and based on battery data received from the electric vehicle, wherein the battery data includes a current charge status of the battery, said processor is further programmed to calculate a predicted charging duration based on the current charge status.

11. A method for providing demand response information to a user of an electric vehicle, said method comprising:
receiving demand response data;
generating a plurality of energy prices based on the demand response data using a processor, wherein each energy price is associated with a time range; and
presenting the plurality of energy prices to the user of the electric vehicle.

12. A method in accordance with claim 11, further comprising:
receiving battery data from the electric vehicle, wherein the battery data includes a current charge status of the battery;
calculating a plurality of recharging costs based on the demand response data and based on the battery data; and
calculating a predicted charging duration based on the current charge status of the battery.

13. A method in accordance with claim 11 or claim 12, further comprising calculating a plurality of recharging costs for at least one charging station that is within at least one of a range and a route of the electric vehicle.

14. A method in accordance with any one of claims 11-13, wherein presenting the plurality of energy prices further comprises presenting the plurality of energy prices to the user via a display device.

15. A method in accordance with any one of claims 11-13, wherein presenting the plurality of energy prices further comprises presenting the plurality of energy prices to the user via at least one of a navigation system and an onboard vehicle computer.
